# EUROPÄISCHE PATENTSCHRIFT

(11) **EP 3 271 601 B1**
(45) Veröffentlichungstag und Bekanntmachung des Hinweises auf die Patenterteilung: **08.05.2019**
(21) Anmeldenummer: 16714228.0
(22) Anmeldetag: 10.03.2016
(51) Int. Cl.: F16D 13/71, F16D 13/70, F16D 13/64

(54) **KUPPLUNG MIT ANPRESSPLATTENSEGMENTHALTENDER TRAGSTRUKTUR**
CLUTCH COMPRISING PRESSURE-PLATE-SEGMENT-HOLDING SUPPORT STRUCTURE
EMBRAYAGE PRÉSENTANT UNE STRUCTURE DE SUPPORT SUPPORTANT UN SEGMENT DE PLATEAU DE PRESSION

(30) Priorität: 19.03.2015 DE 102015204998
(43) Veröffentlichungstag der Anmeldung: 24.01.2018
(73) Patentinhaber: Schaeffler Technologies AG & Co. KG, 91074 Herzogenaurach (DE)
(72) Erfinder: BERNHARDT, Johannes, 77830 Bühlertal (DE)
(86) Internationale Anmeldenummer: PCT/DE2016/200135
(87) Internationale Veröffentlichungsnummer: WO 2016/146123

(56) Entgegenhaltungen:
- EP-A1- 0 594 404
- DE-A1- 3 343 505
- DE-A1- 4 238 255
- DE-A1- 10 234 834
- DE-A1-102010 053 551
- JP-U- S50 138 458

## Beschreibung

Die Erfindung betrifft eine Druckplatte für eine Reibungskupplung eines Kraftfahrzeugs gemäß dem Oberbegriff des Patentanspruchs 1, die vorgesehen ist zusammen mit einer anderen Druckplatte eine Kupplungsscheibe mit wenigstens einem Reibelement zum Drehmomentübertragen einzuklemmen, wobei die Druckplatte eine Trägerstruktur aufweist, an der zum Zusammenwirken mit dem wenigstens einem Reibelement eine Vielzahl von Gegenreibelementen angebunden ist.

Die Offenlegungsschrift DE 10 2013 215 448 A1 beschreibt ebenfalls eine Anpressplatte für eine Reibungskupplung. Die Anpressplatte umfasst ein Halteelement und eine Mehrzahl von Reibplattensegmenten zur Bildung einer Reibfläche, wobei das Halteelement eine Anpressseite und eine der Anpressseite gegenüberliegende Gegenseite aufweist, wobei die Reibplattensegmente an der Anpressseite des Halteelements anliegen und zumindest in Verbindungsbereichen stoffschlüssig mit diesem verbunden sind.

Weiterhin beschreibt eine weitere Offenlegungsschrift, nämlich die DE 10 2014 211 310 A1, eine Anpressplatte mit verkippbaren Teilbereichen. Sie offenbart eine Anpressplatte für eine Reibungskupplung eines in einem Kraftfahrzeug angeordneten Antriebsstranges, wobei die Anpressplatte um eine Drehachse drehbar gelagert ist und, zum Verbinden einer rotierenden Druckplatte mit einer Welle, wie einer Getriebeeingangswelle, von einer ausgekuppelten Stellung, in der sie spielbehaftet zur Druckplatte angeordnet ist, in eine eingekuppelte Stellung, in der sie mit der Druckplatte reibkraftschlüssig verbunden ist, umschaltbar ist, wobei die Anpressplatte mehrere Teilbereiche aufweist, die so aneinander angebunden sind, dass sie zueinander in einer axialen Richtung der Drehachse verkippbar sind; sowie eine Reibungskupplung für einen Antriebsstrang eines Kraftfahrzeuges mit dieser Anpressplatte und einer um die Drehachse verdrehbar gelagerten Druckplatte.

Die Nachteile des in diesen Druckschriften offenbarten Standes der Technik liegen darin, dass mangels einer entsprechend ausgestalteten Bauteilstruktur keine Relativbewegung zwischen den Gegenreibelementen und der Trägerstruktur möglich ist. Somit liegt auch keine Möglichkeit vor, eine Verdrehung, eine Verkippung und/oder eine Neigung einzelner Gegenreibelemente zueinander zu erwirken. Dies wirkt sich unter anderem negativ auf die Kraftübertragung zwischen den einzelnen Kupplungselementen sowie auf den Verschleiß der gesamten Kupplungseinheit aus.

Aus der DE 10 2010 053 551 A1 ist eine Druckplatte bekannt, die auf den Oberbegriff des Patentanspruchs 1 lesbar ist.

Es ist somit die Aufgabe der vorliegenden Erfindung die Nachteile aus dem Stand der Technik zu beheben, und insbesondere eine Vergleichmäßigung der Kontaktdruckverteilung im Reibkontakt zu erreichen.

Erfindungsgemäß gelöst wird diese Aufgabe durch eine Druckplatte gemäß Patentanspruch 1, wobei die Trägerstruktur so bemessen und bezüglich ihres Materials beschaffen ist, dass eine in Umfangsrichtung wirkende Verformung, etwa eine Verbiegung, eine Dehnung, eine Stauchung und/oder eine Verschiebung, an der Trägerstruktur eine Lageveränderung eines oder mehrerer der Gegenreibelemente relativ zur Trägerstruktur bewirkt. Auf diese Weise wird der Reibkraftschluss zwischen der Druckplatte und der Kupplungsscheibe nicht beeinflusst, wenn Störkräfte in Umfangsrichtung auftreten. Diese Trennung der Funktion der mehrteiligen Druckplatte unter dem Einfluss von verschiedensten Kräften wirkt sich positiv auf die Lebensdauer der einzelnen Bauteile aus. Auf diese Weise wird eine Druckplatte zur Verfügung gestellt, die in der Lage ist, im Reibkontakt entstehende Kräfte in Umfangsrichtung über eine dafür geeignete Trägerstruktur, aufzunehmen und abzuführen, insbesondere über eine gewollt zur Verfügung gestellte Verwindbarkeit.

Vorteilhafte Ausführungsformen sind in den Unteransprüchen beansprucht und werden nachfolgend näher erläutert.

So ist es von Vorteil, wenn die Druckplatte als Anpressplatte ausgebildet ist und zum axialen Lageverändern ausgelegt und zur Anordnung vorgesehen ist, etwa durch Angreifen eines Federelements, wie einer Hebelfeder. Auf diese Weise ist die Anpressplatte, die während eines Kupplungsprozesses axial verschoben wird, mehrteilig ausgebildet. Auf diese Weise ist es möglich, die einzelnen Bauteile ihrer Funktion und der wirkenden Kraft nach entsprechend zu gestalten und somit zu optimieren.

Es ist weiterhin vorteilhaft, wenn zumindest eines der Gegenreibelemente mit einem ersten radialen, stirnseitigen Ende und/oder einem zweiten radialen, stirnseitigen Ende, an der Trägerstruktur angebracht ist. Auf diese Weise ist sichergestellt, dass der Kraftfluss beziehungsweise die Kraftübertragung zwischen einem der Gegenreibelemente und der Trägerstruktur an mindestens einem ersten radialen Ende des Gegenreibelementes stattfindet. Diese Übertragung der Kraft zwischen den Gegenreibelementen und der Trägerstruktur ermöglicht die Lageveränderung eines oder mehrerer der Gegenreibelemente relativ zur Trägerstruktur, wodurch die Flexibilität der Einheit erhöht wird.

Ferner ist es zweckmäßig, wenn das Gegenreibelement form-, kraft- und/oder stoffschlüssig an der Trägerstruktur befestigt ist. Dies ermöglicht eine effiziente Kraftübertragung, wobei unerwünschte Reibungsverluste vermieden werden.

Wenn die Trägerstruktur zwei von einander radial beabstandete Befestigungsringe aufweist und Taschen ausbildet, wobei in die Taschen jeweils/genau/nur ein Gegenreibelement eingesetzt ist, so ist die Position der einzelnen Gegenreibelemente innerhalb des Trägers definiert. Weiterhin kann mithilfe dieser Anordnung genügend Reibfläche zur Verfügung gestellt werden, um die nötige Kraft für den Reibkraftschluss zwischen der Kupplungsscheibe und der Anpressscheibe zur Verfügung zu stellen. Außerdem ist es von Vorteil, wenn das Gegenreibelement form-, kraft- und/oder stoffschlüssig in der Tasche gehalten ist. Auf diese Weise ist das in der Tasche gehaltene Gegenreibelement in der Lage, eine in Umfangsrichtung wirkende Kraft aufzunehmen, und somit die Lageveränderung des Gegenreibelements gegenüber der Trägerstruktur zu ermöglichen. Dies wirkt sich schonend auf die Gegenreibelemente aus, da ihnen keine elastische Verformung widerfährt.

Ein vorteilhaftes Ausführungsbeispiel ist auch dadurch gekennzeichnet. dass die Trägerstruktur aus Blechmaterial ausgeformt ist. Die elastischen Eigenschaften von Blech wirken sich dabei besonders vorteilhaft aus. Das Blechmaterial ist dann nämlich besonders gut in der Lage, Kräfte in Umfangsrichtung zu kompensieren und auf diese Weise die Gegenreibelemente zu entlasten. Weiterhin stellt das Blechmaterial in der Regel keinen erwähnenswerten Kostenpunkt dar.

Die Erfindung betrifft auch eine Kraftfahrzeugreibungskupplung in die eine erfindungsgemäße Druckplatte eingesetzt wird. Es ist von Vorteil, wenn diese Kupplung als eine Einscheibenkupplung, eine Mehrscheibenkupplung oder eine Doppelkupplung ausgebildet ist. Auf diese Weise ergibt sich ein breites Anwendungsspektrum der erfindungsgemäßen Druckplatte.

Es ist außerdem von Vorteil, wenn die Kupplung als eine gezogene Kupplung oder als eine gedrückte Kupplung ausgestaltet ist. Auf diese Weise ist der Betätigungsmechanismus der Kupplung variabel, was den Anwendungsbereich der erfindungsgemäßen Druckplatte weiter vergrößert.

Zweckmäßig ist es dabei, wenn auf einer der Kupplungsscheibe abgewandten Seite des Gegenreibelementes eine Betätigungseinrichtung, wie ein Vorsprung, eine Vertiefung, ein Nocken und/oder ein Zuganker, vorhanden ist. Diese Betätigungseinrichtung eignet sich, um ein Element, das für die Betätigung der Kupplung zuständig ist, damit zu verbinden. Dadurch, dass die Trägerstruktur nicht mit dieser Betätigungseinrichtung verbunden ist, muss lediglich das Gegenreibelement auf die Betätigungseinrichtung abgestimmt sein. Das Gegenreibelement eignet sich bekanntermaßen gut, um beispielsweise eine der genannten Möglichkeiten als Betätigungseinrichtung daran zu befestigen.

Außerdem ist es von Vorteil, wenn zwischen den einzelnen Taschen in Radialrichtung ausgebildete Rippen als Trägerstruktur vorhanden sind. Diese Rippen eignen sich, um den Gegenreibelementen neben den bereits erwähnten radialen Aufhängungen zusätzliche Aufhängungen in Umfangsrichtung zu gewähren. Weiterhin ist es mit ihrer Hilfe möglich, die Trägerstruktur einteilig auszuformen. Dies wirkt sich günstig auf die Herstellungskosten aus.

Außerdem ist es ein Vorteil, wenn die Rippen als integrale Bestandteile der als metallische Blechplatte ausgebildeten Trägerstruktur ausgeformt sind. Dies ermöglicht einen direkten Kraftfluss von der radial inneren Kante der Trägerstruktur zur radial äußeren Kante der Trägerstruktur, ohne dass der Kraftfluss zwingend über eines der Gegenreibelemente geführt wird.

Es ist außerdem von Vorteil, wenn jedes der Gegenreibelemente an seinen in einer Transversalebene liegenden Enden form-, kraft- und/oder stoffschlüssig an der Trägerstruktur festgelegt ist. Diese ermöglichen einen definierten Krafteinleitungspunkt zwischen den Gegenreibelementen und der Trägerstruktur. Die Kraftaufnahme in der Trägerstruktur kann mittels Vorsprüngen realisiert werden, die aus der Trägerstruktur in die Gegenreibelemente hineinragen. Von diesen Vorsprüngen kann es pro Gegenreibelement jeweils mehrere geben. Die Vorsprünge weisen eine solche Form auf, dass sich mit ihrer Hilfe ein funktionserfüllender Form-, Kraft- und/oder Stoffschluss realisieren lässt.

Die Gegenreibelemente können die Trägerstruktur axial durchdringen, wobei sich die ein- oder mehrteilige Trägerstruktur in Umfangsrichtung nachgiebig, elastisch verformbar, dämpfend, gegenüber den Gegenreibelementen verhalten kann. Dies garantiert eine effiziente Kraftaufnahme der Störkräfte in Umfangsrichtung, ohne dass die den Reibkraftschluss realisierenden Gegenreibelemente beeinträchtigt werden.

Es ist von Vorteil, wenn die Trägerstruktur drehfest mit einem Kupplungsdeckel verbunden ist. Dies minimiert den unerwünschten Schlupf innerhalb einer Kupplungseinheit und erhöht somit deren Effizienz. Weiterhin gilt, dass die Trägerstruktur und der Kupplungsdeckel eine integrale Bauweise aufweisen können. Dies bewirkt, dass die Kupplungseinheit aus weniger Bauteilen besteht, wodurch die Komplexität der Einheit abnimmt.

Wenn die Gegenreibelemente in axialer Richtung ein dickeres Profil aufweisen als die Trägerstruktur, wird garantiert, dass auch im eingekuppelten Zustand lediglich die Gegenreibelemente mit der Kupplungsscheibe in Kontakt stehen. Dies erhöht die Bestimmtheit des Kraftflusses innerhalb der Kupplungseinheit.

Auch wirkt es sich vorteilhaft auf die Druckplatte aus, wenn zum einen die Trägerstruktur die Kräfte in radialer Richtung und in Umfangsrichtung, und zum anderen ein zur Kupplungseinheit gehörendes Federelement die Kräfte in axialer Richtung aufnimmt. Auf diese Weise bleibt eine Verkippung ebenso wie eine axiale Bewegung der Gegenreibelemente möglich, was ein Ausrichten der Gegenreibelemente an der Kupplungsscheibe ermöglicht. Somit ist die erfindungsgemäße Druckplatte in der Lage, geometrische Unreinheiten der Kupplungsscheibe zu kompensieren. Auf diese Weise wird die Flexibilität der gesamten Einheit gesteigert.

Außerdem ist es vorteilhaft, wenn die Trägerstruktur in radialer Richtung auf Höhe der Gegenreibelemente einen zusätzlichen Blechring aufweist, an dem die Gegenreibelemente abgestützt sein können. Dieser zusätzliche Blechring erfüllt die Funktion der erhöhten Stabilität.

Eine weitere vorteilhafte Ausführungsform besteht darin, dass die Trägerstruktur an ihrer der Kupplungsscheibe abgewandten Seite eine Anordnung zur axialen Wegbegrenzung der Gegenreibelemente aufweist. Diese axiale Wegbegrenzung begünstigt den Reibkraftschluss zwischen der Kupplungsscheibe und den Gegenreibelementen. Sie trägt somit dazu bei, dass auch nach sehr großer Abnutzung der Gegenreibelemente ein ausreichender Reibkraftschluss zwischen der Kupplungsscheibe und den Gegenreibelementen sichergestellt ist.

In anderen Worten kann gesagt werden, dass eine Segmentierung der Anpressplatte/der Druckplatte ein Ausrichten der einzelnen Gegenreibelemente / Gegenreibscheibenelemente an der Kupplungsscheibe ermöglicht und somit zu einer Vergleichmäßigung der Kontaktdruckverteilung im Reibkontakt führt. Diese Homogenisierung der Flächenpressung bringt eine Reduzierung der lokalen Belastung mit sich und trägt somit zur Vermeidung von Temperaturspitzen bei. Auf diese Weise kann sowohl die Drehmomentsübertragung als auch der Verschleiß des Kupplungssystems reduziert werden. Weiterhin ergeben sich systemische Potenziale durch die Möglichkeit der Anpresskraftreduzierung oder durch die Möglichkeit der Steigerung der Leistungsdichte.

Ein weiterer Vorteil der erfindungsgemäßen Druckplatte besteht in der Anbindung der Gegenreibelemente durch nachgiebige Elemente, nämlich die entsprechend ausgebildete Trägerstruktur, in der Kupplung.

Es kann weiterhin von Vorteil sein, einzelne Segmente der Anpressplatte in einer ringförmigen Tragstruktur, beispielsweise in einem Blechring aufzunehmen und am Kupplungsdeckel anzubinden. Diese Aufnahme kann kraft-, form- und/oder stoffschlüssig erfolgen. Weiterhin kann jedes der Segmente auf seiner der Kupplungsscheibe abgewandten Seite, je nach Betätigungsart der Kupplung einen Nocken oder einen Zuganker aufweisen, durch den alle Segmente in axialer Richtung durch ein Federelement / eine Tellerfeder beaufschlagt werden können, um die Kupplung ein- bzw. auszurücken.

Es kann weiterhin gelten, dass ein Blechring die Funktion von Blattfederpaketen übernimmt und die einzelnen Segmente zueinander ausrichtet. Die bereits erwähnte stoffschlüssige Anbindung jedes Segments an den Blechring kann beispielsweise durch Schweißen erfolgen. Hierbei kann bedacht werden, dass die Befestigungspunkte des Blechrings am Kupplungsdeckel bzw. der Gegendruckplatte zwischen benachbarten Segmenten angeordnet sein sollen, damit jeder Blechring möglichst viel Material für die Axialbewegung der Segmente, insbesondere bei einer verschlissenen Kupplungsscheibe, zur Verfügung stellen kann.

Die Erfindung wird nachfolgend mittels Figuren näher erläutert.

Es zeigen:
- Fig. 1: einen Längsschnitt der gesamten Kupplungseinheit, wobei eine gezogene Kupplung dargestellt ist,
- Fig. 2: einen Längsschnitt der gesamten Kupplungseinheit, wobei eine gedrückte Kupplung dargestellt ist,
- Fig. 3: einen Längsschnitt der gesamten Kupplungseinheit, wobei eine gedrückte Kupplung dargestellt ist,
- Fig. 4: einen Längsschnitt der gesamten Kupplungseinheit, wobei eine gezogene Kupplung dargestellt ist,
- Fig. 5: einen Längsschnitt der gesamten Kupplungseinheit, wobei sowohl eine gezogene als auch eine gedrückte Ausführungsform in der Abbildung dargestellt sind,
- Fig. 6: einen Längsschnitt der gesamten Kupplungseinheit, wobei eine gedrückte Kupplung dargestellt ist,
- Fig. 7: eine schematische Draufsicht, wobei nur ein Abschnitt der Druckplatte sichtbar ist, wobei sowohl die Trägerstruktur, als auch beispielhaft zwei Gegenreibelemente sichtbar sind,
- Fig. 8: eine schematische Draufsicht einer weiteren Ausführungsform, wobei wiederum ein Abschnitt der Druckplatte sichtbar ist, wobei neben der Trägerstruktur vier beispielhafte Gegenreibelemente sichtbar sind.

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

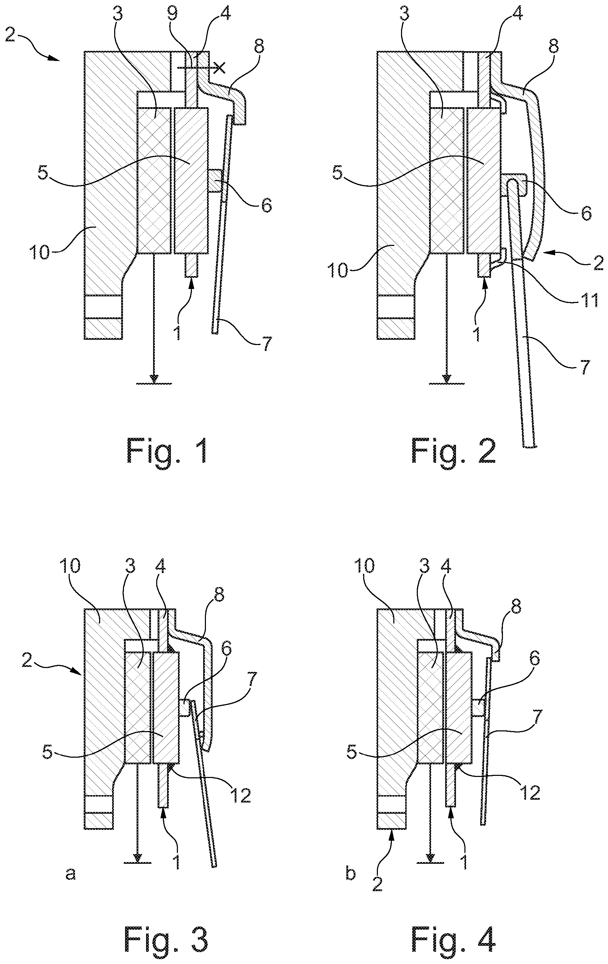

Die Figur 1 zeigt eine Druckplatte 1 für eine Reibungskupplung 2 eines Kraftfahrzeugs, die vorgesehen ist, zusammen mit einer anderen Druckplatte 1 eine Kupplungsscheibe mit wenigstens einem Reibelement 3 zum Drehmomentübertragen einzuklemmen, wobei die Druckplatte 1 eine Trägerstruktur 4 aufweist, an der zum Zusammenwirken mit dem wenigstens einen Reibelement 3 eine Vielzahl von Gegenreibelementen 5 angebunden ist.

An der dem Reibelement 3 abgewandten Seite des Gegenreibelements 5 befindet sich ein Stutzen 6. Dieser eignet sich um die von Seiten eines Federelementes 7 wirkende Kraft auf die Gegenreibelemente 5 weiterzuleiten. Außer an dem Stutzen 6 liegt das Federelement 7 im gezeigten Zustand an einem Kupplungsdeckel 8 an.

In Figur 1 ist der Kupplungsdeckel 8 mit der Trägerstruktur 4 durch eine Schraubenverbindung 9 drehfest verbunden. Auf der den Gegenreibelementen 5 abgewandten Seite des Reibelements 3 liegt das Reibelement 3 an einer Gegendruckplatte 10 an. Diese ist, eventuell über weitere Elemente, drehfest mit einer Kurbelwelle verbunden. Die Kraftübertragung der Kurbelwelle auf eine Getriebewelle kann somit über die Gegendruckplatte 10, das Reibelement 3, die Gegenreibelemente 5 und die Trägerstruktur 4 stattfinden.

Bezüglich Figur 1 sei noch erwähnt, dass es sich in der hier dargestellten Ausführungsform um eine gezogene Kupplung handelt.

In Figur 2 ist eine weitere Ausführungsform dargestellt. Hierbei handelt es sich um eine gedrückte Kupplung. Eine axiale Wegbegrenzung 11 erfüllt die Funktion, dass die Gegenreibelemente 5 axial beschränkt sind.

Der Stutzen 6 bildet mit dem Federelement 7 einen Formschluss. Diese Anordnung wird durch die erfindungsgemäße Aufteilung der Druckplatte 1 in die Trägerstruktur 4 und in die Gegenreibelemente 5 ermöglicht. Die Gegenreibelemente 5 erstrecken sich radial in ähnlicher Höhe wie das Reibelement 3. Auf diese Weise wird ein optimaler Reibkraftschluss bei minimalem Materialverbrauch ermöglicht.

Figur 3 zeigt ein weiteres Ausführungsbeispiel. An einer Schweißnaht 12 ist ersichtlich, dass die Anbindung zwischen der Trägerstruktur 4 und den Gegenreibelementen 5 mittels eines Stoffschlusses vorgenommen worden ist. In der als gedrückte Kupplung ausgeführten Ausführungsform findet die Kraftübertragung zwischen dem Stutzen 6 und dem Federelement 7 mittels eines Kraftschlusses statt. Außerdem ist ersichtlich, dass die Trägerstruktur 4 nicht in Kontakt mit dem Reibelement 3 steht.

In der Figur 4 ist eine gezogene Ausführungsform der Reibungskupplung dargestellt. In dieser Ausführungsform ragt der Kupplungsdeckel 8 nur sehr wenig in radialer Richtung in die Kupplung hinein. Auf diese Weise kann Material gespart werden. Analog zu Figur 3 ist auch in Figur 4 die Schweißnaht 12 sichtbar, die der Stoffschluss zwischen der Trägerstruktur 4 und den Gegenreibelementen 5 sicherstellt.

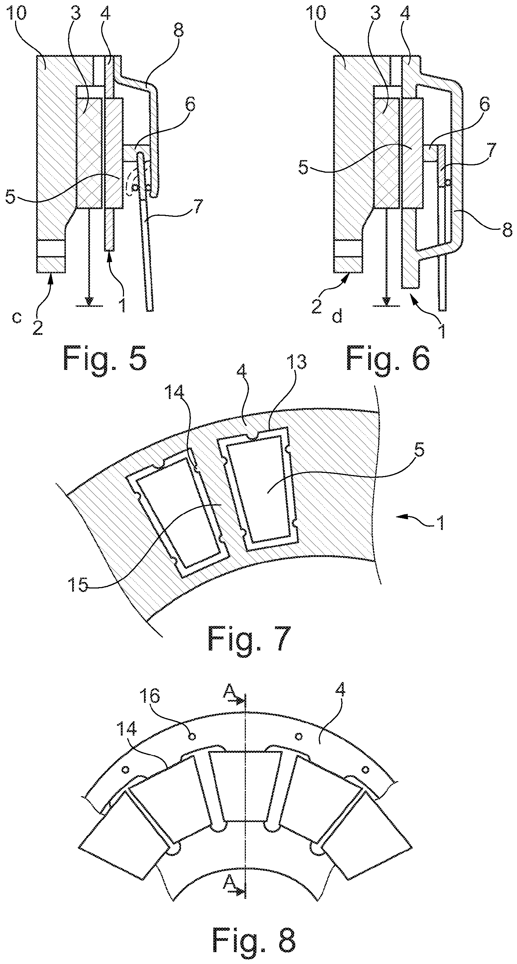

Eine weitere Ausführungsform ist in Figur 5 dargestellt. Die gestrichelten Linien des Kupplungsdeckels 8 deuten an, dass sich diese Ausführungsform sowohl als gedrückte Kupplung, als auch als gezogene Kupplung ausgestalten lässt. Diese Wahl der Kupplungsform bringt einen radial deutlich weiter Richtung Rotationsachse zeigenden Kupplungsdeckel 8 als noch in Figur 4, mit sich. Der Stutzen 6 weist einen Formschluss mit dem Federelement 7 auf.

Figur 6 zeigt eine weitere Ausführungsform. Die Trägerstruktur 4 und der Kupplungsdeckel 8 sind hier als integrale Einheit aufgebaut. Somit ist keine, wie in Figur 1 dargestellte, Schraubenverbindung 9 nötig.

Figur 7 zeigt eine schematische Draufsicht einer Ausführungsform, bei der die Trägerstruktur 4 einteilig ausgebildet ist. Die Gegenreibelemente 5, von denen in Figur 7 zwei Stück dargestellt sind, befinden sich innerhalb von Taschen 13. In einer Tasche 13 findet jeweils ein Gegenreibelement 5 Platz. Um den Kraftfluss zwischen den Gegenreibelementen 5 und der Trägerstruktur 4 sicherzustellen, weist die Tasche 13 Vorsprünge 14 auf, die den Gegenreibelementen 5 zugewandt sind.

In der einstückigen Variante der Trägerstruktur 4, wie sie in Figur 7 dargestellt ist, treten zudem zwischen den einzelnen Gegenreibelementen 5 Rippen 15 auf. Diese weisen, verglichen mit den Gegenreibelementen 5 in Umfangsrichtung eine geringe Breite auf. Zudem können sich an der Rippe 15 weitere Vorsprünge 14 befinden. In Figur 7 sind die einzelnen Gegenreibelemente 5 trapezförmig dargestellt. In ihrer Gestaltung sind sie jedoch nicht auf diese Form beschränkt.

In Figur 8 ist eine zweiteilige Ausführung der Trägerstruktur 4 sichtbar. In dieser Ausführungsform ist der innere Teil der Trägerstruktur 4 über die Gegenreibelemente 5 mit dem radialen äußeren Teil der Trägerstruktur 4 verbunden. Die in der zuvor beschriebenen Figur 7 sichtbaren Rippen 15 sind hier nicht angebracht. Über den geringen Abstand der Gegenreibelemente 5 in Umfangsrichtung ist es möglich, große Reibkräfte zu übertragen.

In der in Figur 8 dargestellten Ausführungsform weisen die Vorsprünge 14 eine andere Form auf. Sie sind zudem ausschließlich radial an die Gegenreibelemente 5 angebunden. Verbindungslöcher 16 erfüllen die Funktion, dass die Trägerstruktur 4 an weitere Elemente der Kupplung angebunden werden kann. Die Verbindungslöcher 16 sind in Umfangsrichtung versetzt und entgegengesetzt zu den Vorsprüngen 14 angeordnet. Somit wirken sie sich nicht negativ auf den Kraftfluss zwischen zwei Gegenreibelementen 5, der über die Trägerstruktur 4 stattfindet, aus.

### Bezugszeichenliste

- 1: Druckplatte
- 2: Reibungskupplung
- 3: Reibelement
- 4: Trägerstruktur
- 5: Gegenreibelemente
- 6: Stutzen
- 7: Federelement
- 8: Kupplungsdeckel
- 9: Schraubenverbindung
- 10: Gegendruckplatte
- 11: Axiale Wegbegrenzung
- 12: Schweißnaht
- 13: Tasche
- 14: Vorsprung
- 15: Rippen
- 16: Verbindungslöcher

## Patentansprüche

1. Druckplatte (1) für eine Reibungskupplung (2) eines Kraftfahrzeugs, die vorgesehen ist, zusammen mit einer anderen Druckplatte (1) eine Kupplungsscheibe mit wenigstens einem Reibelement (3) zum Drehmomentübertragen einzuklemmen, wobei die Druckplatte (1) eine Trägerstruktur (4) aufweist, an der zum Zusammenwirken mit dem wenigstens einem Reibelement (3) eine Vielzahl von Gegenreibelementen (5) angebunden ist, wobei die Trägerstruktur (4) so bemessen und bezüglich ihres Materials beschaffen ist, dass eine in Umfangsrichtung wirkende Verformung an der Trägerstruktur (4) eine Lageveränderung eines oder mehrerer der Gegenreibelemente (5) relativ zur Trägerstruktur (4) bewirkt, **dadurch gekennzeichnet, dass** die Trägerstruktur (4) Taschen (13) ausbildet, wobei die Taschen (13) als Durchgangslöcher in der Trägerstruktur (4) ausgebildet sind, in die jeweils ein Gegenreibelement (5) eingesetzt ist.

2. Druckplatte (1) nach Anspruch 1 **dadurch gekennzeichnet, dass** die Druckplatte (1) als Anpressplatte ausgebildet ist und zum axialen Lageverändern ausgelegt und zur Anordnung vorgesehen ist

3. Druckplatte (1) nach einem der Ansprüche 1 und 2 **dadurch gekennzeichnet, dass** zumindest eines der Gegenreibelemente (5) mit einem ersten radialen Ende und/oder einem zweiten radialen Ende an der Trägerstruktur (4) angebracht ist.

4. Druckplatte (1) nach einem der Ansprüche 1 bis 3 **dadurch gekennzeichnet, dass** das Gegenreibelement (5) form-, kraft- und/oder stoffschlüssig in der Tasche (13) gehalten ist.

5. Druckplatte (1) nach einem der Ansprüche 1 bis 4 **dadurch gekennzeichnet, dass** die Trägerstruktur (4) aus Blechmaterial ausgeformt ist.

6. Kraftfahrzeugreibungskupplung (2) mit einer Druckplatte (1) nach einem der Ansprüche 1 bis 5, wobei die Kupplung (2) als eine Einscheibenkupplung, eine Mehrscheibenkupplung oder eine Doppelkupplung ausgebildet ist.

7. Kraftfahrzeugreibungskupplung (2) nach Anspruch 6, wobei die Kupplung als eine gezogene Kupplung oder eine gedrückte Kupplung ausgestaltet ist.

## Claims

1. Pressure plate (1) for a friction clutch (2) of a motor vehicle, which pressure plate (1) is provided, together with another pressure plate (1), to clamp in a clutch disc with at least one friction element (3) for the transmission of torque, the pressure plate (1) having a carrier structure (4), to which a multiplicity of corresponding friction elements (5) are attached for interacting with the at least one friction element (3), the carrier structure (4) being dimensioned and provided with regard to its material in such a way that a deformation on the carrier structure (4), which deformation acts in the circumferential direction, brings about a positional change of one or more of the corresponding friction elements (5) relative to the carrier structure (4), **characterized in that** the carrier structure (4) configures pockets (13), the pockets (13) being configured as through holes in the carrier structure (4), into which through holes in each case one corresponding friction element (5) is inserted.

2. Pressure plate (1) according to Claim 1, **characterized in that** the pressure plate (1) is configured as a pressing plate, and is designed for the axial positional change and is provided for the arrangement.

3. Pressure plate (1) according to either of Claims 1 and 2, **characterized in that** at least one of the corresponding friction elements (5) is attached by way of a first radial end and/or a second radial end to the carrier structure (4).

4. Pressure plate (1) according to one of Claims 1 to 3, **characterized in that** the corresponding friction element (5) is held in the pocket (13) in a positively locking, non-positive and/or integrally joined manner.

5. Pressure plate (1) according to one of Claims 1 to 4, **characterized in that** the carrier structure (4) is formed from sheet metal material.

6. Motor vehicle friction clutch (2) having a pressure plate (1) according to one of Claims 1 to 5, the clutch (2) being configured as a single disc clutch, a multiple disc clutch or a double clutch.

7. Motor vehicle friction clutch (2) according to Claim 6, the clutch being configured as a pull-type clutch or a press-type clutch.

## Revendications

1. Plateau de pression (1) pour un embrayage à friction (2) d'un véhicule automobile, qui est prévu, conjointement avec un autre plateau de pression (1), pour serrer un disque d'embrayage avec au moins un élément de friction (3) pour le transfert de couple, le plateau de pression (1) présentant une structure de support (4) à laquelle se raccorde une pluralité d'éléments de friction conjugués (5) pour coopérer avec l'au moins un élément de friction (3), la structure de support (4) étant dimensionnée et constituée, en termes de matériau, de telle sorte qu'une déformation agissant dans la direction périphérique, appliquée à la structure de support (4), provoque une variation de position d'un ou plusieurs des éléments de friction conjugués (5) par rapport à la structure de support (4), **caractérisé en ce que** la structure de support (4) constitue des cavités (13), les cavités (13) étant réalisées sous forme de trous traversants dans la structure de support (4), dans lesquels est inséré à chaque fois un élément de friction conjugué (5).

2. Plateau de pression (1) selon la revendication 1, **caractérisé en ce que** le plateau de pression (1) est réalisé sous forme de plaque de pressage et est conçu en vue de variations de position axiales et est prévu pour être disposé.

3. Plateau de pression (1) selon l'une quelconque des revendications 1 et 2, **caractérisé en ce qu'**au moins l'un des éléments de friction conjugués (5) est monté avec une première extrémité radiale et/ou une deuxième extrémité radiale sur la structure de support (4).

4. Plateau de pression (1) selon l'une quelconque des revendications 1 à 3, **caractérisé en ce que** l'élément de friction conjugué (5) est retenu par engagement par correspondance de formes, par force et/ou par liaison de matière dans la cavité (13).

5. Plateau de pression (1) selon l'une quelconque des revendications 1 à 4, **caractérisé en ce que** la structure de support (4) est formée de matériau en tôle.

6. Embrayage à friction pour véhicules automobiles (2) comprenant un plateau de pression (1) selon l'une quelconque des revendications 1 à 5, l'embrayage (2) étant réalisé sous forme d'embrayage à disque unique, d'embrayage multidisque ou de double embrayage.

7. Embrayage à friction pour véhicules automobiles (2) selon la revendication 6, l'embrayage étant configuré sous forme d'embrayage de type tiré ou d'embrayage de type poussé.
